# EUROPÄISCHE PATENTSCHRIFT

(11) **EP 0 701 711 B1**
(45) Veröffentlichungstag und Bekanntmachung des Hinweises auf die Patenterteilung: **29.10.1997**
(21) Anmeldenummer: 94916971.8
(22) Anmeldetag: 18.05.1994
(51) Int. Cl.: G05D 23/19, B60H 1/00

(54) **VERFAHREN UND SCHALTUNGSANORDNUNG ZUM BETRIEB EINER ELEKTRISCHEN AUTOSITZHEIZUNG**
PROCESS AND CIRCUIT FOR OPERATING AN ELECTRIC CAR SEAT HEATER
PROCEDE ET CIRCUIT PERMETTANT DE FAIRE FONCTIONNER UN CHAUFFAGE ELECTRIQUE POUR SIEGES D'AUTOMOBILES

(30) Priorität: 03.06.1993 DE 4318432
(43) Veröffentlichungstag der Anmeldung: 20.03.1996
(73) Patentinhaber: WÄRME- UND ELEKTROTECHNIK B. RUTHENBERG GMBH, D-85235 Odelzhausen (DE)
(72) Erfinder: HAUBNER, Georg, D-92348 Berg (DE); LORENZEN, Günter, D-82140 Olching (DE)
(74) Vertreter: Schneck, Herbert, Dipl.-Phys., Dr.
(86) Internationale Anmeldenummer: EP9401601
(87) Internationale Veröffentlichungsnummer: WO9429780

(56) Entgegenhaltungen:
- EP-A- 0 445 905
- WO-A-92/17344
- DE-A- 3 329 354

## Beschreibung

Die Erfindung richtet sich auf ein Verfahren und eine Schaltungsanordnung zum Betrieb einer elektrischen Autositzheizung, wobei in einer ersten Phase nach der Inbetriebnahme der ungeheizte Kraftfahrzeugsitz mit der maximal zur Verfügung stehenden bzw. maximal vertretbaren Heizleistung aufgeheizt wird und nach Erreichen einer bestimmten vorgegebenen Aufheizzeit bzw. -temperatur eine Umschaltung in einen geregelten oder gesteuerten Betrieb vorgenommen wird.

Ein derartiges Verfahren und eine entsprechende Schaltungsanordnung werden beispielsweise in der DE 33 29 354 C2 beschrieben.

Eine grundsätzliche Anforderung bei derartigen Autositzheizungen besteht darin, daß dem Benutzer möglichst schnell nach dem Einschalten das subjektive Gefühl einer Wirksamkeit der Heizung, d.h. das Gefühl von Erwärmung und des daraus resultierenden Sitzkomforts vermittelt werden soll. Dementsprechend muß nach Inbetriebnahme der Sitzheizung in der Regel mit einer möglichst hohen Heizleistung gearbeitet werden, während dann später, nach Erreichen der gewünschten Temperatur, sichergestellt werden soll, daß diese Temperatur bei verminderter Heizleistung gleichmäßig eingehalten und eine Überheizung verhindert wird.

Zur Realisierung dieser Anforderungen gibt es verschiedene Verfahren zum Betrieb einer solchen Sitzheizung. Im einfachsten Fall erfolgt eine Aufheizung mit konstanter Leistungszufuhr, wobei sich nach einiger Zeit dann ein Gleichgewicht zwischen der zugeführten elektrischen Leistung und der durch Wärmestrahlung und Wärmeleitung abgegebenen Wärmeleistung einstellt. Dieses Verfahren hat einerseits den grundsätzlichen Nachteil, daß nicht mit einer hohen Anfangsheizleistung gearbeitet werden kann, weil sich die Leistungszufuhr ja an dem angestrebten Gleichgewichtszustand orientieren muß, und daß andererseits individuellen Eigenschaften des Sitzes und Wünschen des Benutzers nicht Rechnung getragen werden kann.

Zur Begrenzung der Heizleistung nach Erreichen einer bestimmten Soll-Temperatur ist es auch möglich, Bimetall-Thermostaten oder ähnliche Thermostaten einzussetzen, wobei solche Regelsysteme allerdings große Schalttoleranzen aufweisen.

Komfortabler sind Systeme mit Zweipunktregelung, wobei es möglich ist, zur Erfassung der Ist-Temperatur einen Temperaturfühler im Bereich der Sitzheizung zu montieren oder aber zum Beispiel den Widerstands-Temperaturgradienten der Heizlitze heranzuziehen, um hieraus ein Regler-Eingangssignal abzuleiten.

Die erstgenannten Systeme mit Temperaturfühlern weisen den Nachteil auf, daß durch die Notwendigkeit eines derartigen Temperaturfühlers ein zusätzlicher Aufwand erforderlich ist, da einerseits der Temperaturfühler selbst als gesondertes Bauteil eingebaut werden muß und andererseits Zuleitungen innerhalb des Heizelementes, Kontakstellen zum Kabelbaum auf den Heizelementen sowie Steckverbinder und Kontaktklemmen erforderlich sind. Auch das zuletzt genannte Verfahren der Erfassung des Widerstands-Temperaturgradienten der Heizlitze bedingt einen erheblichen baulichen Aufwand und wird höheren Komfortanforderungen nicht gerecht.

Ein grundsätzliches Problem bei allen Regelverfahren mit Erfassung des Temperatur-Ist-Wertes besteht schließlich darin, daß die Temperaturmessung nicht an der Sitzoberfläche vorgenommen werden kann, also dort, wo der Benutzer die Heizwirkung auch tatsächlich wahrnimmt. Dementsprechend arbeiten solche Systeme weder individuell auf den jeweiligen Sitz abgestimmt, z.B. in Abhängigkeit von dem Vorhandensein einer relativ dünnen Stoffpolsterung oder einer relativ dicken Lederpolsterung, noch individuell abgestimmt auf den Benutzungszustand, d.h. Belegung des Sitzes durch eine Person bei Betriebsbeginn, noch hinsichtlich des individuellen Temperatur-Wohlbefindens der jeweiligen benutzenden Person.

Ein weiterer, sehr wichtiger Gesichtspunkt, der bei der Konstruktion der Steuerung- bzw. Regelung für solche Sitzheizungen zunehmend eine Rolle spielt, liegt darin, daß die Kraftfahrzeughersteller zwar einerseits für einen bestimmten Kraftfahrzeugtyp in ihrer Geometrie und Oberflächenbeschaffenheit häufig ganz unterschiedliche Sitze anbieten, andererseits aber aus wirtschaftlichen und produktionstechnischen Gründen daran interessiert sind, Sitzheizung und Steuerung als einbaufertige, vollständige Module zu beziehen, wobei herkömmlicherweise durch diese an sich konkurrierenden Forderungen eine optimale Anpassung des Aufheiz- und Heizverhaltens der Sitzheizung an die jeweilige Sitzart selbst innerhalb ein- und derselben Fahrzeugbaureihe nicht möglich ist.

Hiervon ausgehend liegt der Erfindung die Aufgabe zugrunde, ein Verfahren und eine Schaltungsanordnung zu schaffen, wodurch bei geringem Aufwand an Verkabelung und kraftfahrzeugseitigen Anschlüssen ein hohes Maß an individueller Anpassung sowohl hinsichtlich der jeweiligen Sitzart als auch der Person des Benutzers möglich sein soll.

Diese Aufgabe wird erfindungsgemäß dadurch gelöst, daß nach Erreichen der vorgegebenen Aufheizzeit bzw. -temperatur nach der ersten Heizphase die Heizleistung in Abhängigkeit von einem in einem nicht flüchtigen Speicher abgespeicherten Kennlinienfeld bzw. Tabellenfeld mittels eines Mikroprozessors derart vorgegeben wird, daß für hinsichtlich der Größe, Polsterung und Oberflächenbeschaffenheit unterschiedliche Sitze empirisch die optimale zuzuführende Heizleistung bzw. Heizzeit in Abhängigkeit von der gewünschten Sitztemperatur an der Oberseite der Sitz- bzw. Rückenfläche ermittelt und in dem nicht flüchtigen Speicher in Form von Kurven oder Tabellen abgespeichert wird, daß von dem Mikroprozessor in Abhängigkeit von einer von dem Mikroprozessor erfassten Codierung des jeweils zu heizenden Sitzes eine Kurve oder Tabelle aus dem Kennlinienfeld bzw. Tabellenfeld ausgewählt wird, und daß dann die Leistungszufuhr zu dem jeweils konkret zu heizenden Sitz entsprechend der ausgewählten Kurven bzw. Tabelle erfolgt.

Die Leistungszufuhr kann dabei gemäß den bekannten Verfahren dosiert werden, d.h. z.B. über eine Spannungsänderung, über die Impulsbreite, Impulsfrequenz oder letztlich auch über eine Zweipunktregelung mit entsprechend abgespeichertem Regelverhalten.

Durch die erfindungsgemäße Lösung wird also insofern ein völlig neuer Weg beschritten, als auch für ganz unterschiedliche Sitze ein optimales Temperaturverhalten an der Oberfläche des Sitzes erreicht werden kann, obwohl dort selbst keine Temperaturmessung stattfindet. Die Erstellung der Sitzheizung und Steuerung als weitgehend eigenständiges, leicht einbaubares Modul wird wesentlich erleichtert.

In weiterer Ausgestaltung der Erfindung kann vorgesehen sein, daß Betriebsdaten, wie Innentemperatur, Außentemperatur, gemessene Temperatur an der Sitzflächenunterseite, Belegung des Sitzes durch eine Person, Betriebszustand des Kraftfahrzeuges, Betriebszustand und Leistung der Kraftfahrzeugbatterie usw. erfaßt und bei der Kurven- bzw. Tabellenauswahl berücksichtigt werden. Die Berücksichtigung dieser Daten kann dabei auch dazu herangezogen werden, z.B. während des Startvorgang für den Motor, wo die Kraftfahrzeugbatterie ohnehin sehr stark belastet ist, die Leistungsentnahme der Sitzheizung ganz zu unterbrechen. Weiterhin kann die Leistungsentnahme reduziert oder unterbrochen werden, wenn die Kraftfahrzeugbatterie geschwächt oder durch andere Verbraucher, wie Heckscheibenheizung und Licht, zeitweise zu stark belastet ist.

Mit besonderem Vorteil ist vorgesehen, daß vom Zeitpunkt der Umschaltung ab eine Steuerung der Leistungszufuhr ausschließlich in Abhängigkeit von der ausgewählten Kurve bzw. Tabelle unabhängig von der Messung des Temperatur-Istwertes erfolgt. Bei der Realisierung einer derartigen Steuerung im Gegensatz zu einer Regelung unter Verwendung eines Temperaturfühlers kommen die Vorteile des erfindungsgemäßen Verfahrens besonders zum Tragen, weil der gesamte Schaltungs- und Verdrahtungsaufwand für Temperatur- und Meßfühler und Meßwertrückführung entfällt. Trotzdem ist es aufgrund der empirischen Messungen, die anhand eines Mustersitzes eben gerade auch an der Sitzoberfläche und auch an verschiedenen Stellen der Sitzoberfläche vorgenommen werden können, möglich, durch Abspeicherung der entsprechenden Kurven oder Tabellen ein optimales Heizverhalten zu erreichen.

Weiterhin kann günstigerweise vorgesehen sein, daß der Mikroprozessor die Kennlinie bzw. Tabelle in Abhängigkeit von einer Temperatur-Sollwert-Vorgabe durch einen Benutzer auswählt. Hierdurch wird dem Rechnung getragen, daß unterschiedliche Personen oft sehr unterschiedliche Temperaturempfindungen haben, so daß in an sich bekannter Weise mittels einer Eingabeeinrichtung ein individueller Temperaturwert vorgegeben werden kann.

Ein besonderer Komfort wird dadurch erreicht, daß der Mikroprozessor die Kurve bzw. Tabelle in Abhängigkeit von einer abgespeicherten, individuell für die Person des jeweiligen Benutzers eingegebenen Kodierung auswählt. Dementsprechend wird die von einem bestimmten Benutzer einmal als für ihn optimal eingestellte Temperatur bzw. Temperaturverteilung immer dann, wenn diese Person das Kraftfahrzeug benutzt, eingestellt. Dies erfolgt günstigerweise so, daß die Kurven- bzw. Tabellenauswahl mit einer personenbezogenen Sitzpositionskodierung kombiniert ist. Hierbei wird ausgenutzt, daß in vielen Kraftfahrzeugen bereits vorgesehen ist, über Stellmotoren die Sitzposition in Abhängigkeit von einer Benutzerkodierung einzustellen.

Mit Vorteil kann vorgesehen sein, daß der jeweils in ein Kraftfahrzeug eingebaute, zu heizende Sitz durch die Steuerung über eine serielle Schnittstelle, insbesondere CAN, identifiziert wird.

Letztendlich kann auch vorgesehen sein, daß der Zeitpunkt der Umschaltung von der ersten Aufheizphase von dem Mikroprozessor in Abhängigkeit von der erkannten Sitzkodierung vorgenommen wird. Dementsprechend wird nicht nur in der zweiten, gesteuerten Phase eine Anpassung an den Sitz vorgenommen, sondern auch hinsichtlich Dauer bzw. Endtemperatur der Aufheizphase.

Die eingangs genannte Aufgabe wird auch gelöst durch eine Schaltungsanordnung zur Steuerung bzw. Regelung der Heizeinrichtung einer elektrischen Autositzheizung, welche sich dadurch auszeichnet, daß sie einen Mikroprozessor (MC) und einen nichtflüchtigen Speicher umfaßt, in welchem eine Mehrzahl von Aufheizkurven bzw. Aufheiztabellen in Abhängigkeit von der gewünschten Sitztemperatur auswählbar abspeicherbar ist, wobei die Heizlitzen (6) der Autositzheizung über einen Ausgang des Mikroprozessors (MC) und einen n-Kanal-FET-Transistor direkt geschaltet werden und wobei während des geregelten oder gesteuerten Betriebes die Heizleistung in Abhängigkeit von der getroffenen Auswahl bestimmt wird.

Weitherhin ist bei einer solchen Schaltungsanordnung vorteilhafterweise eine serielle Schnittstelle zur Identifizierung des jeweils anzusteuernden Autositzes vorgesehen.

Nachfolgend wird die Erfindung anhand eines bevorzugten Ausführungsbeispiels in Verbindung mit der Zeichnung näher erläutert. Dabei zeigen:
- Fig. 1: eine schematische, teilweise aufgebrochene Seitenansicht eines Autositzes mit Sitzheizung,
- Fig. 2: eine blockschaltbildartige Darstellung einer Schaltungsanordnung für eine erfindungsgemäße Sitzheizungssteuerung,
- Fig. 3: ein Flußdiagramm zur Erläuterung des Steuerverfahrens und
- Fig. 4: ein Kennlinienfeld, wie es erfindungsgemäß für die Steuerung abgespeichert wird, und aus welchem die Steuerdaten abgerufen werden.

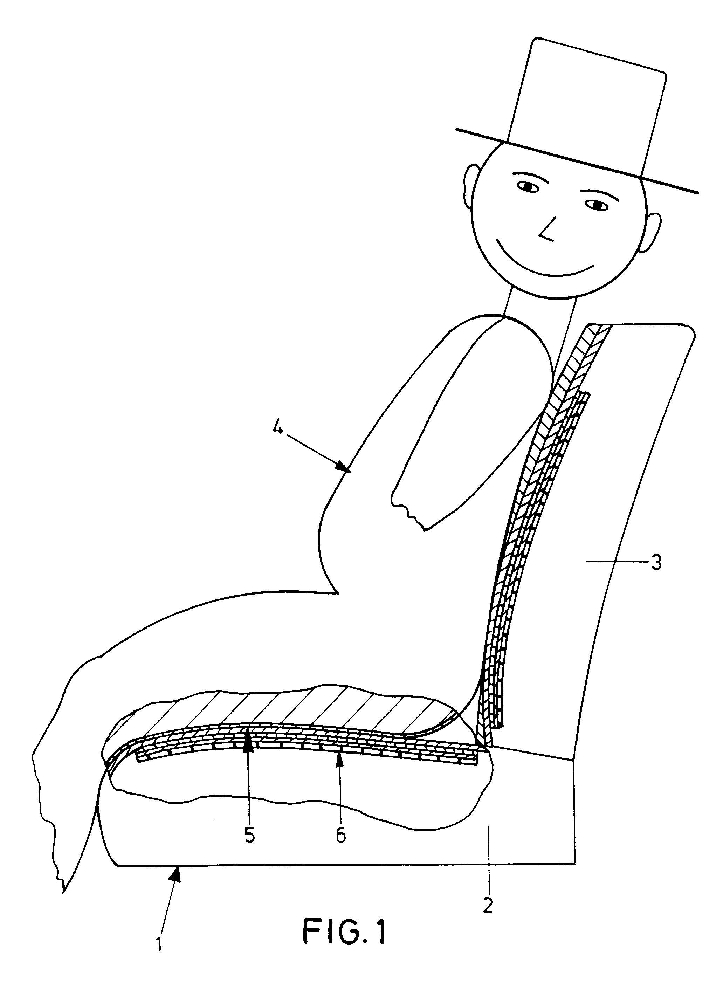

In Fig. 1 ist schematisch ein Autositz 1 umfassend ein Sitzpolster 2 und ein Rückenlehnenpolster 3 dargestellt. Der Benutzer 4 berührt die Oberfläche 5 des Sitzpolsters 1 und der Rückenlehne 3, wobei die Heizlitze 6 der Sitzheizung im Abstand von dieser Oberfläche 5 verläuft, woraus eines der erfindungsgemäß in Angriff genommenen Regel- bzw. Steuerprobleme resultiert.

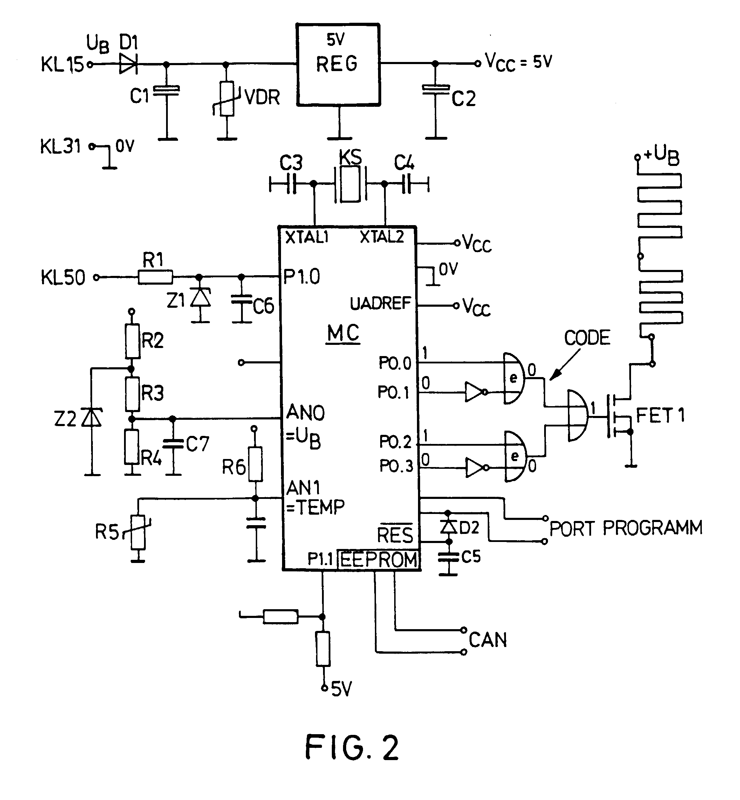

Zur Realisierung des erfindungsgemäßen Steuerverfahrens dient die in Fig. 2 dargestellte, nachfolgend beschriebene Schaltung.

Die Batteriespannung U_{B} von den Kraftfahrzeugklemmen KL15, KL31 liegt über eine Diode D1 an einem Glättungskondensator C1 mit VDR-Schutzbeschaltung und an einem 5-Volt-Spannungsregler REG. Der Regler REG speist auf einen Kondensator C2 die Betriebsspannung für den Mikrocomputer MC, beispielsweise vom Typ MD 68HC05P8, und die Gatter.

Die Schwingung für den Mikrocomputer MC liefert ein Keramikschwinger KS der über zwei Kondensatoren C3 und C4 an Masse liegt. Der Keramikschwinger KS ist an die Pins XTAL1 und XTAL2 des Mikrocomputer-Oszillators angeschlossen.

Über einen Kondensator C5 mit Entladediode D2 ist der RES des Mikrocomputer MC beschaltet.

Das Anlassersignal für die Betätigung des Anlassers des Kraftfahrzeuges liegt ausgehend von der Klemme KL50 des Kraftfahrzeugs über einen Widerstand R1 mit einer Zenerdiode Z1 und einen Kondensator C6 am Mikrocomputer-Pin Port P1.0. Die Batteriespannung U_{B} liegt an einem Spannungsteiler R2, R3, R4. Eine Zenerdiode Z2 begrenzt hohe Eingangsspannungen auf einen Maximalwert am Mikrocomputer-Eingang AN0 von 5 Volt.

Über einen Kondensator C7 wird der anliegende Spannungswert geglättet.

Die Sitztemperatur wird erfaßt über einen temperaturabhängigen Widerstand R5, der über einen Spannungsteiler R6 an 5 Volt liegt.

Als Analog-Digital-Wandler-Eingang dient der Eingang AN1. Als Referenz für die Analog-Digital-Wandlung im Mikrocomputer MC dient die 5 Volt-Spannung am Mikrocomputer-Eingang UADREF.

Die Heizlitzen 6 der Sitzheizung werden über einen Ausgang des Mikrocomputers und einen n-Kanal-FET-Transistor FET1 direkt geschaltet. Aus Sicherheitsgründen ist eine Code-Vorgabe CODE von 1-0-1-0 oder 0-1-0-1 für die Zuschaltung des Heizungstransistors vorgesehen. Die Zuschaltung erfolgt über die eingezeichnete NOT-EXOR-NOR-Kombination ausgehend von den Pins P0.0 bis P0.3. Diese Logikschaltung CODE könnte auch in den Mikrocomputer MC integriert sein.

Wenn der PIN P1.1 an 1-Signal liegt, wird die den Sitz in seinem Aufbau, seiner Art und Größe charakterisierende Sitz-Kenn-Nummer in den Mikrocomputer MC eingespeist. Die Dateneingabe erfolgt über die serielle Schnittstelle CAN bzw. könnte auch über Port P0.0 bis P0.7 des Mikrocomputers MC erfolgen.

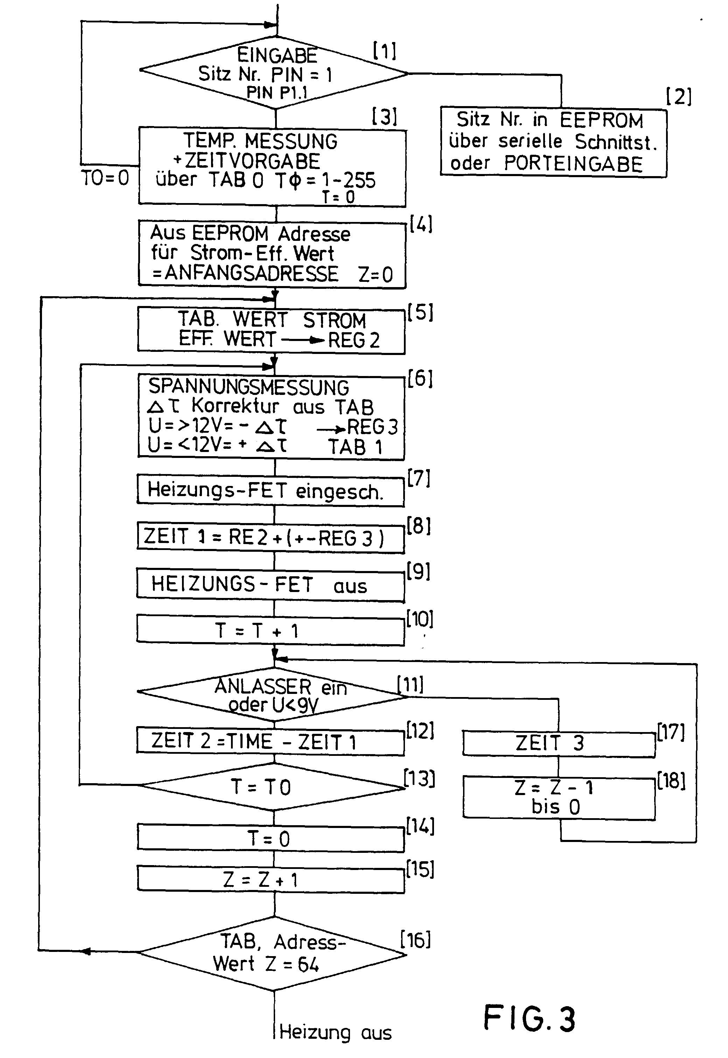

Der Ablauf der erfindungsgemäßen Steuerung wird nachfolgend anhand des in Fig. 3 dargestellten Flußdiagramms näher erläutert, wobei die nachfolgend in eckigen Klammern gesetzten Ablaufphasen rechts oberhalb der jeweiligen Kästen des Flußdiagramms eingetragen sind:

Bei [1] wird entschieden, ob die Sitz-Kenn-Nummer in einen internen EEPROM-Speicher des Mikrocomputers MC eingegeben wird, oder ob das Betriebsprogramm abgearbeitet wird.

Bei [2] wird die Sitz-Kenn-Nummer als Wert zwischen 0 und 255 über die serielle Schnittstelle (z.B. eine IIC-Schnittstelle) oder über ein Port, z.B. Port P0.0 bis P0.7, eingegeben.

Bei [3] wird die Sitztemperatur gemessen und entsprechend aus einer Tabelle ein Zeitwert entnommen. Der Zeitwert entspricht der Anzahl der abzuarbeitenden Heizstrom-Impulse pro Stromeffektivwert aus einer der Sitz-Kenn-Nummer entsprechenden Tabelle.

Bei sehr kaltem Sitz ist die Zahl der Impulse entsprechend groß, bei warmem Sitz geht die Impulszahl gegen 0. Es erfolgt keine weitere Abarbeitung des Betriebsprogramms.

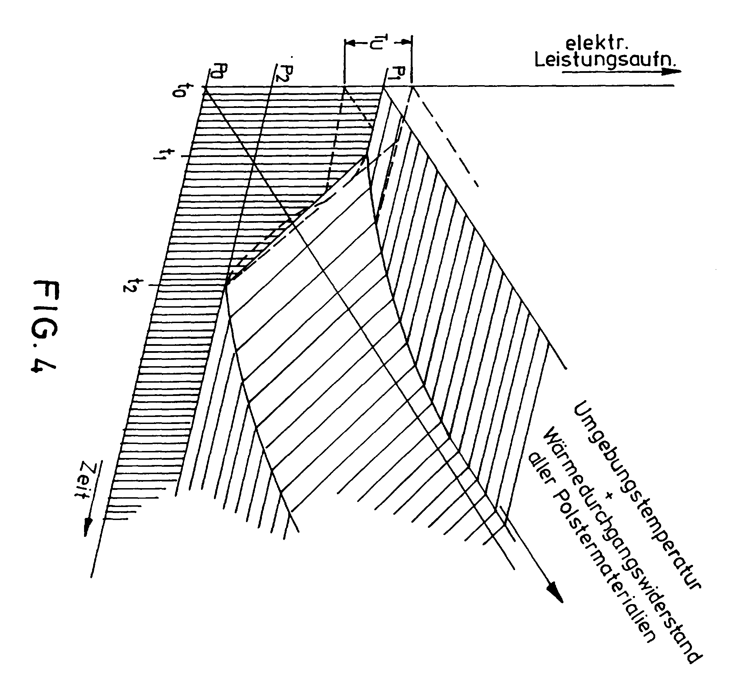

Bei [4] wird aus dem EEPROM diejenige Tabelle ermittelt, die die zu dem jeweiligen Sitz passende Strom-Zeit-Fläche gemäß dem Kennlinienfeld in Fig. 4 ergibt. Der Tabellenzeiger steht auf 0.

Bei [5] wird aus der Strom-Zeit-Tabelle der Wert entsprechend dem Tabellenzeiger entnommen. Der Wert bezieht sich auf eine Betriebsspannung von z.B. 12 V und muß bei höheren Spannungen nach unten und bei niedrigeren Spannungen nach oben korrigiert werden.

Bei [6] wird die Betriebsspannung gemessen und der Korrekturfaktor aus der Tabelle ermittelt (die Änderungen erfolgen quadratisch mit der Spannung).

Bei [7] wird der n-Kanal-FET-Transistor FET1 leitend geschaltet.

Bei [8] wird die korrigierte Impulseinschaltzeit abgearbeitet.

Bei [9] wird der n-Kanal-FET-Transistor FET1 abgeschaltet.

Bei [10] wird die durch die Temperaturmessung vorgegebene Impulszahl (hoch bei niedriger Temperatur, niedrig bei hoher Temperatur) um 1 erhöht.

Bei [11] erfolgt eine Abfrage, ob der Anlasser zugeschaltet ist, oder ob die Batteriespannung U_{B} z.B. unter einem Wert von 9 Volt liegt. Zutreffendenfalls wird nach [17] verzweigt. Der FET-Transistor FET1 bleibt solange ausgeschaltet, bis der Anlasser wieder abgeschaltet wird. Hierdurch wird eine Überlastung der Batterie durch einen gleichzeitigen Einschaltezustand von Sitzheizung und Anlasser vermieden.

Bei [12] wird die Pausenzeit abzüglich der kurzen Zeit zum Abarbeiten der Blöcke 13 und 6 abgearbeitet.

Bei [13] erfolgt die Entscheidung, ob die Impulse mit gleichem Strom-Tabellenwert vollständig abgearbeitet sind.

Bei [14] ist der Impulszähler auf 0 gesetzt.

Bei [15] werden die Tabellenwerte erhöht. Diese betragen für die Strom-Zeit-Werte beispielsweise 64. Mit Z = Z + 1 wird der Tabellenzeiger um 1 erhöht.

Bei [16] ist, wenn alle 0 bis 63 Speicherplätze abgearbeitet sind, die Strom-Zeit-Fläche an der Sitzheizung voll abgearbeitet. Es erfolgt ein Ausstieg aus dem Betriebsprogramm in ein Programm für ein weiteres Nachheizen, wobei das Nachheizen unter 2- oder 3-Punktregelung oder aber gesteuert entsprechend abgespeicherten Tabellen erfolgen kann.

Bei [17] wird eine feste Zeit abgearbeitet.

Bei [18] wird der Tabellenzeiger-Wert für die Strom-Zeit-Fläche um 1 erniedrigt, wenn z.B. das Anlassen des Motors sehr lange andauert. Die Strom-Effektiv-Fläche wird dann zum Teil oder ganz wiederholt.

In Fig. 4 ist längs der X-Achse die Zeit t, längs der Y-Achse die elektrische Leistungsaufnahme P der Heizlitzen der Sitzheizung und längs der Z-Achse als Summenparameter aller beteiligter Polstermaterialien der Temperatur-Summen-Durchgangswiderstand aufgetragen.

Als vierte, in der Zeichnung nicht dargestellte, in den programmierbaren Tabellen zu berücksichtigende Komponente kann die Umgebungstemperatur derart berücksichtigt werden, daß bei hohen Außentemperaturen der Anfangsheizvorgang, der mit maximaler Heizleistung stattfindet, verkürzt oder unterdrückt wird, um auf diese Weise sicherheitsgefährdende oder komforteinschränkende Übertemperaturen bei besonders heißen Klimabedingungen zu vermeiden.

Das Kennfeld zeigt im Normalfall in der Y-Z-Ebene stets die maximal mögliche Heizleistung P1, die sich zum Beginn des Aufheizvorganges beim Zeitpunkt t₀ aus der aktuellen Port-Spannung und dem Festwiderstand des Heizelements ergibt.

Diese anfängliche, maximale Heizleistung P1 wird bis zu einem Zeitpunkt t₁ unverändert aufrechterhalten, wobei die Zeit bis zum Erreichen von t₁ eine Funktion des Summen-Durchgangswiderstandes sowie Einflüssen der Umgebungstemperatur ist.

Von dem Zeitpunkt t₁ ab bis zu dem Zeitpunkt t₂ wird die Heizleistung gesteuert bzw. geregelt reduziert, so daß zum Zeitpunkt t₂ die vorprogrammierte bzw. individuell vom Benutzer voreinstellbare Sitztemperatur erreicht ist, welche dann durch weitere Heizstromimpulse gesteuert oder geregelt konstant gehalten wird.

Im beispielsweise dargestellten Kennlinienfeld verläuft die Abhängigkeit des Zeitpunktes t₂ von dem Summendurchgangswiderstand und der Umgebungstemperatur entsprechend derjenigen von t₁, was jedoch nicht notwendigerweise so vorgesehen zu sein braucht.

## Patentansprüche

1. Verfahren zum Betrieb einer elektrischen Autositzheizung, wobei in einer ersten Phase nach der Inbetriebnahme der ungeheizte Kraftfahrzeugsitz (1) mit der maximal zur Verfügung stehenden bzw. maximal vertretbaren Heizleistung aufgeheizt wird und nach Erreichen einer bestimmten vorgegebenen Aufheizzeit bzw. -temperatur eine Umschaltung in einen geregelten oder gesteuerten Betrieb vorgenommen wird, **dadurch gekennzeichnet, daß** nach Erreichen der vorgegebenen Aufheizzeit bzw. -temperatur die Heizleistung in Abhängigkeit von einem in einem nichtflüchtigen Speicher abgespeicherten Kennlinien- bzw. Tabellenfeld von einem Mikroprozessor (MC) derart vorgegeben wird, daß
- für hinsichtlich ihrer Größe, Polsterung und Oberflächenbeschaffenheit unterschiedliche Sitze (1) empirisch die optimale zuzuführende Heizleistung bzw. Heizzeit in Abhängigkeit von der gewünschten Sitztemperatur an der Oberseite der Sitz- bzw. Rückenlehnenfläche ermittelt und in dem nichtflüchtigen Speicher in Form von Kurven oder Tabellen abgespeichert wird,
- daß von dem Mikroprozessor in Abhängigkeit von einer von dem Mikroprozessor (MC) erfaßten Kodierung des jeweils zu heizenden Sitzes (1) eine Kurve oder Tabelle aus dem Kennlinien- bzw. Tabellenfeld ausgewählt wird,
- und daß dann die Leistungszufuhr zu dem jeweils konkret zu heizenden Sitz entsprechend der ausgewählten Kurve oder Tabelle erfolgt.

2. Verfahren nach Anspruch 1, **dadurch gekennzeichnet, daß** Betriebsdaten, wie Innentemperatur, Außentemperajur, gemessene Temperatur an der Sitzflächenunterseite, Belegung des Sitzes (1) durch eine Person (4), Betriebszustand des Kraftfahrzeuges, Betriebszustand und Belastung der Kraftfahrzeugbatterie insbesondere des momentanen Spannungszustandes des Bordnetzes, erfaßt und bei der Kurven- bzw.Tabellenauswahl berücksichtigt werden.

3. Verfahren nach Anspruch 1, **dadurch gekennzeichnet, daß** vom Zeitpunkt der Umschaltung ab eine Steuerung der Leistungszufuhr ausschließlich in Abhängigkeit von der ausgewählten Kurve bzw. Tabelle unabhängig von der Messung eines Temperatur-Istwertes erfolgt.

4. Verfahren nach Anspruch 1, **dadurch gekennzeichnet, daß** der Mikroprozessor (MC) die Kennlinie bzw. Tabelle in Abhängigkeit von einer Temperatur-Sollwert-vorgabe durch einen Benutzer (4) auswählt.

5. Verfahren nach Anspruch 1, **dadurch gekennzeichnet, daß** der Mikroprozessor (MC) die Kurve bzw. Tabelle in Abhängigkeit von einer abgespeicherten, individuell für die Person des jeweiligen Benutzers eingegebenen Kodierung auswählt.

6. Verfahren nach Anspruch 5, **dadurch gekennzeichnet, daß** die Kurven- bzw. Tabellenauswahl mit einer personenbezogenen Sitzpositionskodierung kombiniert ist.

7. Verfahren nach Anspruch 1, **dadurch gekennzeichnet, daß** der zu heizende Sitz (1) durch die Steuerung über eine serielle Schnittstelle, insbesondere CAN, identifiziert wird.

8. Verfahren nach Anspruch 7, **dadurch gekennzeichnet, daß** der Zeitpunkt der Umschaltung von der ersten Aufheizphase von dem Mikroprozessor (MC) in Abhängigkeit von der erkannten Sitzkodierung vorgenommen wird.

9. Schaltungsanordnung zur Durchführung des Verfahrens nach einem der Ansprüche 1 bis 8 zur Steuerung bzw. Regelung der Heizlitzen umfassenden Heizeinrichtung einer elektrischen Autositzheizung, wobei in einer ersten Phase nach der Inbetriebnahme der ungeheizte Kraftfahrzeugsitz (1) mit der maximal zur Verfügung stehenden bzw. maximal vertretbaren Heizleistung aufgeheizt wird und nach Erreichen einer bestimmten vorgegebenen Aufheizzeit bzw. -temperatur eine Umschaltung in einen geregelten oder gesteuerten Betrieb vorgenommen wird, dadurch gekennzeichnet, daß sie einen Mikroprozessor (MC) und einen nichtflüchtigen Speicher umfaßt, in welchem eine Mehrzahl von Aufheizkurven bzw. Aufheiztabellen in Abhängigkeit von der gewünschten Sitztemperatur auswählbar abspeicherbar ist, wobei die Heizlitzen (6) der Autositzheizung über einen Ausgang des Mikroprozessors (MC) und einen n-Kanal-FET-Transistor direkt geschaltet werden und wobei während des geregelten oder gesteuerten Betriebes die Heizleistung in Abhängigkeit von der getroffenen Auswahl bestimmt wird.

10. Schaltungsanordnung nach Anspruch 9, **dadurch gekennzeichnet, daß** eine serielle Schnittstelle zur Identifizierung des jeweils anzusteuernden Autositzes (1) vorgesehen ist.

## Claims

1. Method for operating an electric seat heating means of a vehicle, the unheated vehicle seat (1) being heated up by the maximally available or admissible heating power in a first phase after the starting, and a switch-over to controlled operation being performed after a certain given heat-up time or temperature, respectively, is reached, **characterized in that** the given heat-up time or temperature, respectively, being reached, the heating power is preset by a microprocessor (MC) as a function of a field of characteristic curves or tables stored in a non-volatile memory such that
- for seats (1) that differ in size, upholstery and surface quality, the optimally to be supplied heating power or heating time, respectively, is empirically detected as a function of the desired seat temperature on the surface of the seating face or the rear and is stored in the non-volatile memory in the form of curves or tables,
- that a curve or table is selected from the field of characteristic curves or tables, respectively, by the microprocessor as a function of a coding recorded by the microprocessor (MC), of the respective seat (1) to be heated,
- and that then the power supply to the respective seat to be actually heated takes place in accordance with the selected curve or table.

2. Method according to claim 1, **characterized in that** operating data such as the inside temperature, the outside temperature, the temperature taken on the underside of the seat surface, the occupation of the seat (1) by a person (4), the running state of the vehicle, the working state of, and the demand on the vehicle battery, in particular the instantaneous voltage of the supply system, are recorded and taken into account for the selection of the curves or tables.

3. Method according to claim 1, **characterized in that** from the time of switch-over, a control of the power supply will take place exclusively in dependence on the selected curve or table, respectively, independently of the measurement of an actual temperature.

4. Method according to claim 1, **characterized in that** the microprocessor (MC) selects the characteristic curve or the table, respectively, as a function of a desired temperature preset by a user (4).

5. Method according to claim 1, **characterized in that** the microprocessor (MC) selects the curve or table, respectively, in dependence on a stored coding individually entered for the respective user.

6. Method according to claim 5, **characterized in that** the selection of curves or tables, respectively, is combined with a seat position coding related to a person.

7. Method according to claim 1, **characterized in that** the seat (1) to be heated is identified by the control system via a serial interface, in particular CAN.

8. Method according to claim 7, **characterized in that** the time of the switch-over from the first heat-up phase is effected by the microprocessor (MC) as a function of the seat coding recognized.

9. Circuit arrangement for putting into practice the method according to one of claims 1-8 for the control of the heating device, comprising heating strands, of an electric vehicle seat heating means, the unheated vehicle seat (1) being heated up by the maximally available or admissible heating power in a first phase after the starting, and a switch-over to controlled operation being performed after a certain given heat-up time or temperature, respectively, is reached, **characterized in that** it comprises a microprocessor (MC) and a non-volatile memory, in which, in dependence on the desired seat temperature, to store a plurality of heat-up curves or heat-up tables, respectively, for selection, the heating strands (6) of the seat heating means being directly switched via an output of the microprocessor (MC) and an n-channel FET-transistor and the heating power being determined in dependence of the selection made during the controlled operation.

10. Circuit arrangement according to claim 9, **characterized in that** a serial interface is provided for identifying the respective vehicle seat (1) to be triggered.

## Revendications

1. Procédé pour le fonctionnement d'un chauffage électrique destiné à des sièges d'automobiles, dans lequel dans une première phase après la mise en route, le siège du véhicule automobile (1) non chauffé est chauffé à la capacité de chauffage maximum disponible ou possible et après avoir atteint une durée de chauffage ou une température préétablie, on commute sur un régime régulé ou commandé, caractérisé en ce qu'après avoir atteint la durée de chauffage ou de température préétablie, la capacité de chauffage est prédonnée en fonction de tableaux ou de courbes mémorisés dans une mémoire non volatile par un microprocesseur (MC) de telle sorte qu'on détermine empiriquement,
- à l'égard des dimensions, revêtement et état de surface de différents sièges, la capacité de chauffage optimum à fournir ou durée de chauffage en fonction de la température de siège souhaitée sur le dessus du siège ou sur la surface du dossier et il est procédé à la mémorisation dans une mémoire non volatile sous forme de courbes ou de tableaux,
- et en ce qu'à partir du microprocesseur, on choisit en fonction d'une codification saisie par le microprocesseur du siège respectif à chauffer (1) une courbe ou tableau à partir des courbes ou tableaux,
- et en ce qu'ensuite s'effectue l'amenée de capacité de chauffage au siège qu'il s'agit concrètement de chauffer en fonction de la courbe ou du tableau choisi.

2. Procédé selon la revendication 1, caractérisé en ce que les données de régime telles que la température interne, la température externe, la température mesurée sur le dessous du siège, l'occupation du siège (1) par une personne (4), l'état de régime du véhicule, l'état de fonctionnement et la charge de la batterie du véhicule en particulier l'état de la tension électrique momentanée du réseau de bord, sont saisies et prises en considération lors de la sélection des courbes ou du tableau.

3. Procédé selon la revendication 1, caractérisé en ce qu'à partir du moment de la permutation, s'effectue une commande de l'amenée de capacité de chauffage exclusivement en fonction de la courbe ou du tableau choisi, indépendamment de la mesure de la valeur réelle de température.

4. Procédé selon la revendication 1, caractérisé en ce que le microprocesseur (MC) choisit la courbe ou tableau en fonction d'une présélection d'une valeur nominale de température choisie par l'utilisateur (4).

5. Procédé selon la revendication 1, caractérisé en ce que le microprocesseur (MC) choisit la courbe ou tableau en fonction d'une codification mémorisée, individuellement introduite pour chaque utilisateur.

6. Procédé selon la revendication 5, caractérisé en ce que la sélection des courbes ou tableaux est combinée à une codification de position de siège rapportée à l'utilisateur.

7. Procédé selon la revendication 1, caractérisé en ce que le siège à chauffer (1) est identifié par la commande par l'intermédiaire d'une interface en série, en particulier CAN.

8. Procédé selon la revendication 7, caractérisé en ce que le moment de la permutation de la première face de chauffage par le microprocesseur (MC) s'effectue en fonction de la codification de siège reconnue.

9. Circuit pour la réalisation du procédé selon une des revendications 1 à 8 pour la commande ou la régulation du système de chauffage comprenant des cordons de chauffage d'un système de chauffage électrique pour sièges automobiles, dans lequel dans une première phase après la mise en route, le siège du véhicule automobile non chauffé (1) est chauffé à la capacité de chauffage maximum disponible ou possible et après avoir atteint une durée de chauffage ou une température préétablie, on commute sur un régime régulé ou commandé, caractérisé en ce qu'il comprend un microprocesseur (MC) et une mémoire non volatile dans laquelle pourront être mis en mémoire de façon sélectionnable, plusieurs courbes ou tableaux de chauffage en fonction de la température de siège souhaitée, les cordons de chauffage (6) du chauffage pour sièges automobiles étant mis directement sous tension par une sortie du microprocesseur (MC) et un transistor à effet de champ à canal N et de telle sorte que pendant le régime régulé ou commandé, la capacité de chauffage est déterminée en fonction de la sélection effectuée.

10. Circuit selon la revendication 9, caractérisé en ce qu'il est prévu une interface en série pour l'identification du siège automobile (1) respectif à chauffer.
